(19) **Europäisches Patentamt European Patent Office Office européen des brevets**

(11) **EP 4 444 600 B1**

(12) **FASCICULE DE BREVET EUROPEEN**

(45) Date de publication et mention de la délivrance du brevet:
**29.10.2025 Bulletin 2025/44**

(21) Numéro de dépôt: **22830782.3**

(22) Date de dépôt: **06.12.2022**

(51) Classification Internationale des Brevets (IPC):
**B62D 12/02** *(2006.01)*     **B62D 13/00** *(2006.01)*
**B62D 47/00** *(2006.01)*

(52) Classification Coopérative des Brevets (CPC):
**B62D 12/02; B62D 13/00; B62D 47/006**

(86) Numéro de dépôt international:
**PCT/EP2022/084674**

(87) Numéro de publication internationale:
**WO 2023/104838 (15.06.2023 Gazette 2023/24)**

(54) **CONVOI DE VEHICULES ET SYSTEME D'ASSERVISSEMENT DE DIRECTION POUR UN TEL CONVOI**

**FAHRZEUGZUG UND LENKUNGSSTEUERSYSTEM FÜR EINEN SOLCHEN ZUG**

**TRAIN OF VEHICLES AND STEERING CONTROL SYSTEM FOR SUCH A TRAIN**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **07.12.2021 FR 2113045**

(43) Date de publication de la demande:
**16.10.2024 Bulletin 2024/42**

(73) Titulaire: **Lohr Industrie**
**67980 Hangenbieten (FR)**

(72) Inventeurs:
• **GATOU, Mike**
**67000 STRASBOURG (FR)**
• **SUTTER, Nicolas**
**67100 STRASBOURG (FR)**

(74) Mandataire: **Merckling, Norbert**
**Cabinet Laurent et Charras**
**1A Place Boecler**
**CS 10063**
**67024 Strasbourg Cedex (FR)**

(56) Documents cités:
**WO-A1-98/40263     DE-A1- 102005 026 017**

## Description

### Domaine technique

La présente invention se rapporte au domaine technique général du transport public de personnes et plus particulièrement à un convoi routier de véhicules modulaires pouvant être utilisés seuls, chacun comme véhicule individuel ou en convoi de plusieurs véhicules attelés. Un tel convoi comprend par exemple deux, trois ou quatre véhicules attelés.

En mode convoi, les passagers sont transportés en position assise ou debout et le convoi est piloté par un seul conducteur dans le véhicule de tête. Les véhicules suiveurs sont soit des véhicules identiques au véhicule de tête, soit des véhicules similaires au véhicule de tête mais dépourvus de poste de conduite.

Les véhicules comportent notamment chacun une motorisation électrique et/ou thermique, un essieu arrière, un essieu avant directeur, un système de freinage, un système de direction assistée et un calculateur pour piloter les fonctionnalités des véhicules en fonction de consignes de fonctionnement ou de sécurité émanant du conducteur ou du calculateur.

Chaque véhicule comporte également des moyens d'attelage. Ces derniers comprennent à l'avant du véhicule un timon d'attelage escamotable et à l'arrière une chape d'attelage. Ainsi, le timon d'attelage d'un véhicule suiveur présente une extrémité libre verrouillée dans la chape d'attelage du véhicule suiveur le précédant ou du véhicule de tête et une extrémité d'articulation articulée sous le véhicule.

Lorsque le convoi routier est formé, les seuls degrés de liberté autorisés entre le véhicule tracteur et le véhicule suiveur sont fournis d'une part par une liaison pivot autour d'un axe transversal situé à l'arrière du véhicule tracteur (liaison pivot de la chape d'attelage sur le châssis) et d'autre part par une liaison rotule ou pivot d'attelage autour d'un point localisé au voisinage de l'essieu avant du véhicule suiveur.

Afin de pouvoir s'intégrer dans la circulation, un tel convoi routier doit être monotrace, c'est-à-dire que les véhicules suiveurs du convoi routier doivent s'inscrire dans la trajectoire du véhicule de tête appelé également véhicule tracteur.

Le convoi doit par ailleurs être stable, en ligne droite et en courbe, notamment en lacet.

### Technique antérieure

On connait, par exemple par l'intermédiaire du document WO 98/40263, un véhicule pouvant former un convoi. Le véhicule décrit comporte notamment un capteur de position du volant, des capteurs d'efforts pour détecter des efforts latéraux exercés au niveau de l'articulation entre les véhicules attelés et un automate. Ce dernier, en entrée, reçoit les données des capteurs de position et d'efforts et, en sortie, des instructions pour piloter un actionneur agissant sur l'orientation des roues d'un essieu directeur. Les essieux directeurs des véhicules suiveurs ne sont ainsi pilotés qu'en fonction des efforts latéraux mesurés au niveau de l'accouplement.

Cependant, une telle solution ne permet pas de mesurer les positions relatives de chaque sous-ensemble cinématique du convoi et de déduire avec précision la position des essieux directeurs des véhicules suiveurs en fonction de ces positions relatives, de la vitesse du convoi et de l'angle du volant du véhicule de tête. La solution présentée dans ce document ne confère au convoi, ni une stabilité suffisante, ni un comportement suffisamment monotrace. En outre, la solution décrite dans ce document n'est pas satisfaisante pour piloter les essieux directeurs des véhicules suiveurs du convoi lors d'une marche arrière.

### Présentation de l'invention

L'objet de l'invention vise par conséquent à pallier les inconvénients de l'art antérieur en proposant un nouveau système de direction assistée pilotée pour convoi routier permettant d'améliorer la stabilité et le comportement monotrace dudit convoi.

Les objets assignés à l'invention sont atteints à l'aide d'un convoi routier motorisé comprenant un véhicule de tête et au moins un véhicule suiveur attelés ainsi qu'une liaison de communication du genre CAN reliant les véhicules du convoi, chacun des véhicules comportant un essieu arrière et un essieu directionnel avant, un système de direction assistée électrique comprenant une crémaillère de direction, un actionneur agissant sur l'orientation angulaire de l'essieu directionnel avant et un automate pilotant l'actionneur, chacun des véhicules comportant également des organes d'attelage avant et des organes d'attelage arrière de manière à réaliser l'attelage du véhicule suiveur au véhicule de tête ou à un autre véhicule suiveur, les automates des véhicules étant paramétrés pour générer des consignes d'orientation angulaire de l'essieu directionnel avant du ou de chaque véhicule suiveur, caractérisé en ce que chacun des véhicules est équipé d'une part d'un capteur d'orientation permettant de déterminer l'angle des roues de l'essieu directeur avant et d'autre part d'un capteur angulaire d'attelage pour déterminer l'orientation angulaire en lacet de l'attelage, l'automate du ou de chaque véhicule suiveur fournissant une consigne d'angle des roues optimale et spécifique à l'actionneur du véhicule suiveur considéré, ladite consigne d'angle optimale et spécifique étant définie en utilisant une loi de pilotage cinématique qui est une fonction de l'angle des roues de l'essieu directeur du véhicule précédent et de l'orientation angulaire en lacet de l'attelage par rapport au châssis du véhicule suiveur considéré, de manière à obtenir un convoi monotrace.

Selon un exemple de réalisation, le capteur d'orientation est un capteur d'angle d'un pignon de crémaillère de direction lequel est localisé en sortie de crémaillère de direction, qui mesure l'angle du pignon de crémaillère par rapport à sa position en ligne droite, ledit angle de pignon de crémaillère permettant de déterminer, par calcul, l'angle des roues de l'essieu directionnel.

Selon un exemple de réalisation, les organes d'attelage avant comprennent un timon d'attelage à une seule articulation d'attelage, localisé sous le véhicule et dont l'extrémité libre est verrouillée angulairement avec les organes d'attelage arrière du véhicule précédent.

Selon un exemple de réalisation, l'articulation d'attelage est localisée dans un plan transversal à la direction longitudinale du véhicule suiveur considéré, au voisinage et de préférence à l'arrière de l'essieu directionnel avant.

Selon un exemple de réalisation, les organes d'attelage arrière comprennent une chape d'attelage.

Selon un exemple de réalisation, au moins le véhicule de tête comporte un poste de conduite équipé d'un volant pour commander manuellement ou à distance l'orientation angulaire de l'essieu directionnel avant dudit véhicule de tête.

Selon un exemple de réalisation, le convoi comprend un véhicule de tête et au moins un véhicule suiveur, ledit véhicule suiveur étant dépourvu de poste de conduite.

Selon un autre exemple de réalisation, le convoi comprend un véhicule de tête et au moins un véhicule suiveur, lesdits véhicules de tête et suiveur étant dépourvus de poste de conduite pour constituer un convoi autonome.

A titre d'exemple, le convoi routier motorisé comportant un véhicule de tête et au moins un véhicule suiveur, peut aussi être utilisé en convoi autonome, même si au moins un de ces véhicules est équipé d'un poste de conduite.

Selon un exemple de réalisation, le convoi comprend deux, trois ou quatre véhicules suiveurs identiques au véhicule de tête.

Selon un exemple de réalisation, la liaison de communication comprend des broches de connexion, pour relier électriquement les véhicules attelés et dont l'architecture électrique permet d'identifier la position de chaque véhicule dans le convoi

Selon un exemple de réalisation, le ou chaque véhicule suiveur est dépourvu d'un poste de conduite, l'automate permettant grâce à une loi de passage de déduire par calcul l'angle du pignon de crémaillère du véhicule suiveur considéré, en tant que consigne destinée à l'actionneur de la crémaillère de direction.

Les objets assignés à l'invention sont atteints également à l'aide d'un procédé d'asservissement de l'orientation des roues de l'essieu directionnel avant d'un véhicule suiveur pour un convoi routier motorisé monotrace tel que présenté ci-dessus, comprenant les étapes :

a) déterminer l'angle des roues de l'essieu directionnel avant par rapport au châssis du véhicule de tête,
b) mesurer l'angle d'attelage du véhicule suiveur correspondant à l'orientation angulaire de l'attelage par rapport au châssis dudit véhicule suiveur,
c) utiliser une loi mathématique déduite d'une modélisation géométrique du convoi, pour déterminer l'angle optimal des roues de l'essieu directeur avant du véhicule suiveur à partir de l'angle des roues déterminé sous a) et de l'angle d'attelage mesuré sous b), et
d) fournir par l'intermédiaire de l'automate du véhicule suiveur, une consigne à l'actionneur de la direction motorisée dudit véhicule suiveur, ladite consigne permettant à l'actionneur d'orienter les roues de l'essieu directionnel avant du véhicule suiveur, suivant un angle correspondant à l'angle optimal déterminé sous c).

Selon un exemple de mise en œuvre, l'étape a) comprend les sous-étapes :

a1) mesurer l'angle du pignon de crémaillère du véhicule de tête par rapport à sa position en ligne droite,
a2) utiliser une première loi de passage LP1 pour déterminer l'angle des roues de l'essieu directionnel avant du véhicule de tête à partie de la mesure effectuée sous a1),

et l'étape d) comprend les sous-étapes :

d1) utiliser une seconde loi de passage LP2 pour déterminer la position angulaire optimale du pignon de crémaillère du véhicule suiveur à partir de l'angle optimal déterminé sous c),
d2) fournir par l'intermédiaire de l'automate du véhicule suiveur, une consigne de position angulaire de pignon de crémaillère à l'actionneur, ladite consigne d'angle correspondant à l'angle optimal de pignon de crémaillère déterminé sous d1).

Selon un exemple de mise en œuvre, le procédé d'asservissement, pour stabiliser en lacet le convoi, comprend les étapes :

- mesurer l'accélération latérale $\delta_i$ du véhicule (i),
- mesurer l'accélération latérale $\delta_{i-1}$ du véhicule précédent (i-1),
- calculer une consigne d'angle stabilisé $\gamma_{ic}$ en augmentant la consigne d'angle optimale y du pignon de crémaillère du véhicule (i) d'un terme de compensation selon la loi : $\gamma_{ic} = \gamma + G.(\delta_{i-1} - \delta_i)$, avec G une constante.

Avantageusement, les broches de connexion sont intégrées aux organes d'attelage avant et arrière du véhicule de tête et du ou des véhicules suiveurs.

Le convoi routier conforme à l'invention présente l'avantage remarquable d'améliorer substantiellement le comportement mono trace dudit convoi ainsi que d'améliorer la stabilité dudit convoi en circulation.

Le convoi conforme à l'invention permet de déduire l'orientation angulaire des roues de l'essieu directionnel correspondant à la position particulière des sous-ensembles cinématiques du convoi, à savoir les véhicules. Dans la mesure où l'on connaît cette orientation angulaire des roues en fonction de la position des sous-ensembles cinématiques du convoi, il est possible d'orienter de façon optimale en temps réel lesdites roues. La précision des manœuvres en marche arrière, notamment lors d'opération d'attelage, est également améliorée.

Les essieux avant directeurs (directionnels) des véhicules suiveurs sont ainsi capables de reprendre les efforts latéraux et ainsi abaisser les efforts latéraux vus par l'essieu arrière (non-directeur) du véhicule précédent. Ceci permet de réduire de façon importante la dérive du convoi lors des changements de direction et d'améliorer de façon substantielle sa stabilité.

En outre, quel que soit le nombre de véhicules suiveurs (ou remorques) dans le convoi, le chauffeur installé dans le véhicule de tête, ressent moins la masse du convoi en manipulant le volant. L'inertie du convoi, qui en général se ressent via un retour d'effort dans le volant du conducteur est ainsi significativement diminuée ou nulle grâce au pilotage des essieux des véhicules suiveurs. La réactivité de l'ensemble formé par le convoi est ainsi améliorée. Les manœuvres en marche arrière en ligne droite ou en virage rayons constants sont ainsi possibles pour le convoi.

Un autre avantage du convoi conforme à l'invention réside dans la possibilité d'utiliser une télécommande pour piloter les phases de manœuvres d'attelage ou de parking au dépôt, notamment lorsque les véhicules suiveurs sont dépourvus de poste de conduite et de volant.

Un autre avantage remarquable du convoi conforme à l'invention est obtenu grâce aux directions assistées pilotées du ou des véhicules suiveurs en rendant un dispositif de stabilisation mécanique spécifique inutile. Ce dernier peut donc avantageusement être remplacé par un système mécanique dont la seule fonction est de recentrer le timon après une utilisation du véhicule.

Un autre avantage remarquable de l'invention réside dans le fait qu'il est efficace, mêmes à des vitesses très faibles, contrairement à des systèmes se basant sur la mesure d'efforts latéraux dans le timon d'attelage et ne présentant pas le même centre de rotation instantané pour l'ensemble du convoi et dont la précision de pilotage est moindre.

**Brève description des figures**

D'autres caractéristiques et avantages de la présente invention apparaîtront plus clairement à la lecture de la description qui va suivre, faite en référence aux dessins annexés, donnés à titre d'exemples non limitatifs, dans lesquels :

- la figure 1 est une vue de dessous, en perspective, d'un exemple de réalisation de convoi routier conforme à l'invention, comportant un véhicule tracteur et un véhicule suiveur avant l'opération d'attelage,
- la figure 2 représente le convoi de la figure 1, avec les véhicules attelés,
- la figure 3 est une vue de dessus, schématique, d'un exemple de réalisation de convoi routier conforme à l'invention, comportant un véhicule tracteur et un véhicule suiveur,
- la figure 4 est une vue de dessus du convoi de la figure 1, illustrant un exemple d'orientations angulaires des essieux des deux véhicules du convoi et du timon d'attelage du véhicule suiveur,
- la figure 5 est une illustration schématique d'un exemple de modélisation géométrique d'une loi cinématique utilisée pour déterminer les angles de consignes des essieux directeurs de véhicules suiveurs, dans un convoi routier conforme à l'invention, et
- la figure 6 est une vue de dessus du convoi de la figure 1, illustrant un exemple d'orientations angulaires des essieux de deux véhicules successifs d'un convoi et du timon d'attelage du véhicule suiveur, en illustrant une correction d'une consigne d'angle des roues du véhicule suiveur grâce à un algorithme de stabilisation.

**Description détaillée de l'invention**

Les éléments structurellement et fonctionnellement identiques présents sur plusieurs figures distinctes, sont affectés d'une même référence numérique ou alphanumérique.

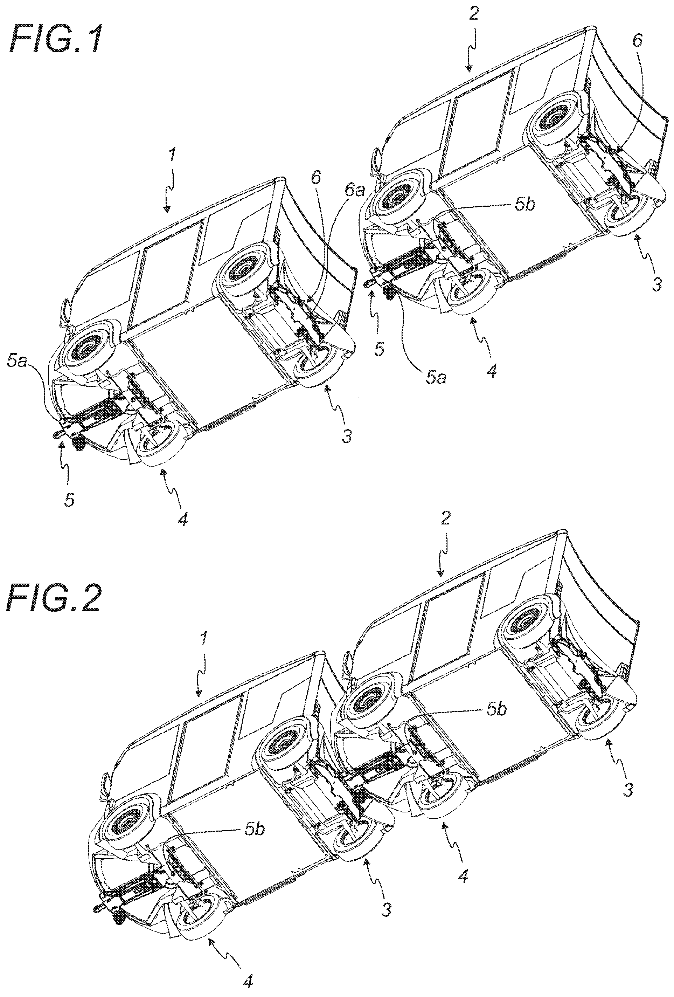

La figure 1 illustre un exemple de réalisation de véhicules destinés à former un convoi routier motorisé conforme à l'invention. Ce dernier comprend donc un véhicule de tête 1 et un véhicule suiveur 2.

Selon un exemple de réalisation, le véhicule suiveur 2 est identique au véhicule de tête 1. Selon un autre exemple de réalisation, le véhicule suiveur 2 peut être dépourvu de poste conduite pour n'être utilisé que en tant que remorque attelée au véhicule de tête 1. Chacun des véhicules 1 et 2 comporte avantageusement un essieu arrière 3 et un essieu directionnel avant 4 appelé aussi essieu directeur.

Chacun des véhicules 1 et 2 comporte également un système de direction assistée électrique comprenant un actionneur électrique, par exemple pilotable en angle, agissant sur l'orientation angulaire de l'essieu avant 4 directionnel et un automate pilotant ledit actionneur. Un tel actionneur fait partie de la direction motorisée du véhicule 1 et 2.

Les véhicules 1 et 2 comprennent également une liaison de communication du genre CAN reliant lesdits véhicules du convoi entre eux et notamment les automates de chacun des véhicules entre eux.

Chacun des véhicules 1 et 2 comporte également des organes d'attelage avant 5 et des organes d'attelage arrière 6, de manière à pouvoir atteler le véhicule suiveur 2 au véhicule de tête 1.

Les organes attelage avant 5 comprennent par exemple un timon d'attelage 5a à une seule articulation d'attelage 5b.

Selon un exemple de réalisation, l'articulation d'attelage 5b est localisé dans un plan transversal à la direction longitudinale du véhicule suiveur 2 considéré, au voisinage et de préférence à l'arrière de l'essieu directionnel avant 4. Un attelage situé au niveau des toits des véhicules 1 et 2 est ainsi envisageable.

Selon un exemple de réalisation avantageux, l'articulation d'attelage 5b est localisé sous les véhicules 1 et 2, à l'arrière de l'essieu directionnel avant 4.

Le timon d'attelage 5a présente une extrémité libre en saillie, laquelle est verrouillée angulairement avec les organes d'attelage arrière 6 du véhicule précédent une fois l'attelage réalisé. Les organes attelage arrière 6 comprennent, par exemple une chape d'attelage 6a. Cette dernière peut par exemple pivoter autour d'un axe transversal parallèle à l'essieu arrière.

Le véhicule de tête 1 comporte avantageusement un poste de conduite équipé d'un volant pour commander l'orientation angulaire de l'essieu directionnel avant 4 correspondant.

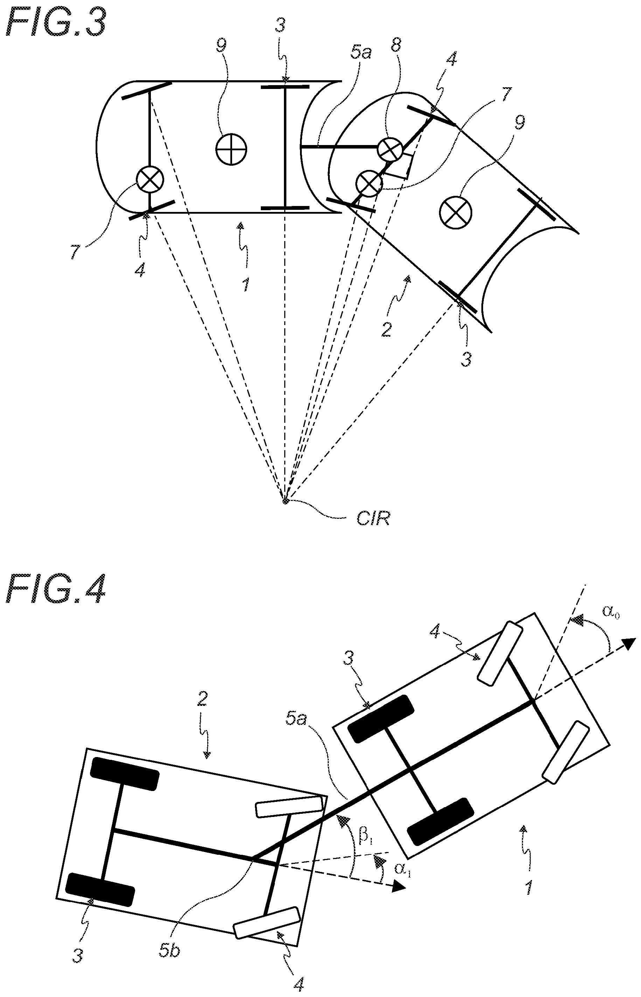

Les figures 2 et 3 illustrent un exemple de réalisation d'un convoi routier motorisé conforme à l'invention dans lequel le véhicule suiveur 2 est attelé au véhicule de tête 1.

L'automate du véhicule suiveur 2 est paramétré pour générer des consignes d'orientation angulaire de l'essieu directionnel avant 4 et plus précisément des consignes d'orientation angulaire des roues dudit essieu directionnel avant 4. Le convoi routier motorisé conforme à l'invention comprend par exemple un véhicule de tête et deux, trois ou quatre véhicules suiveurs 2.

Selon un exemple de réalisation, chacun des véhicules 1 et 2 est équipé d'un capteur d'orientation permettant de mesurer l'angle des roues de l'essieu directeur avant 4. Chacun des véhicules 1 et 2 est également équipé d'un capteur angulaire d'attelage 8 pour déterminer l'orientation angulaire en lacet de l'attelage par rapport au châssis du véhicule 1 et 2, c'est-à-dire l'orientation angulaire du timon d'attelage 5a par rapport à l'axe longitudinal.

L'automate du ou de chaque véhicule suiveur 2 fournit avantageusement une consigne d'angle optimal des roues et spécifique à l'actionneur du véhicule suiveur 2 considéré. Cette consigne d'angle optimal est définie en utilisant une loi de pilotage cinématique qui est une fonction de l'angle des roues de l'essieu directionnel 4 du véhicule précédent et de l'orientation angulaire en lacet de l'attelage par rapport au châssis du véhicule suiveur 2 considéré. Ceci permet d'obtenir un convoi monotrace.

Selon un autre exemple de réalisation, chacun des véhicules 1 et 2 est équipé d'un capteur d'angle du pignon de crémaillère 7 mesurant l'orientation angulaire de son volant par rapport à une position angulaire neutre correspondant à une trajectoire en ligne droite. Ceci permet de déterminer par calcul, l'angle des roues de l'essieu directionnel avant 4 correspondant.

L'automate du ou de chaque véhicule suiveur 2 est destiné à fournir une consigne à l'actionneur dudit véhicule suiveur 2, pour lui permettre d'orienter les roues de son essieu directionnel avant 4 suivant un angle correspondant à l'angle optimal qu'il aura défini au préalable. Un tel angle de roues optimal est défini en utilisant une loi de pilotage cinématique qui est une fonction de l'angle des roues du véhicule précédant le véhicule suiveur 2 considéré (c'est-à-dire localisé devant le véhicule suiveur 2 considéré) et de l'orientation angulaire de l'attelage par rapport au châssis dudit véhicule suiveur 2 considéré.

Selon un exemple de réalisation, l'automate du ou de chaque véhicule suiveur 2 est destiné à fournir une consigne d'angle optimal et spécifique à l'actionneur dudit véhicule.

L'angle du pignon de crémaillère correspond à l'angle de la colonne de direction correspondante, lorsque le véhicule 1, 2 est équipé d'une telle colonne de direction.

La figure 3 est une illustration très schématique d'un exemple de réalisation de convoi routier conforme à l'invention, dans lequel sont illustrés plus particulièrement les essieux directionnels avant 4, un capteur d'angle du pignon de crémaillère 7, un capteur d'angle d'attelage 8 ainsi que le timon d'attelage 5a. Le convoi comporte donc un capteur angulaire entre chaque sous-ensemble cinématique, permettant de déterminer la position relative de chacun desdits sous-ensembles cinématiques et ce en temps réel.

La figure 3 matérialise également le centre instantané de rotation théorique CIR du convoi routier motorisé. Le centre instantané de rotation CIR est identique pour tous les véhicules du convoi, quelle que soit la trajectoire, améliorant la stabilité du dit convoi.

La figure 4 est une vue de dessus d'une illustration schématisée d'orientation angulaire des essieux directionnels avant 4 et du timon d'attelage 5a d'un véhicule suiveur 2 dans un convoi routier. A titre d'exemple, l'utilisation d'une loi de pilotage cinématique de la direction permet d'asservir avec précision l'angle $\alpha_1$ des roues de l'essieu directionnel avant 4 d'un véhicule suiveur 2 en fonction de l'angle $\beta_1$ de son timon d'attelage 5a par rapport à l'axe longitudinal du châssis et de l'angle $\alpha_0$ des roues de l'essieu directionnel avant 4 du véhicule de tête 1.

L'angle $\alpha_0$ des roues de l'essieu directionnel avant 4 est commandé par une action du conducteur sur le volant du véhicule de tête 1 ou par une consigne générée par un dispositif externe, par exemple une télécommande, agissant sur l'actionneur de direction motorisée du véhicule de tête 1.

Le convoi met donc en œuvre un procédé d'asservissement de l'orientation des roues de l'essieu directionnel avant 4 d'un véhicule suiveur 2 pour un convoi routier motorisé monotrace, comprenant successivement les étapes suivantes.

Selon une étape a), on détermine l'angle des roues de l'essieu directionnel avant 4 par rapport au châssis du véhicule de tête 1.

Selon une étape b), on mesure l'angle d'attelage du véhicule suiveur 2 correspondant à l'orientation angulaire de l'attelage par rapport au châssis dudit véhicule suiveur 2,

Selon une étape c), on utilise une loi mathématique déduite d'une modélisation géométrique du convoi, pour déterminer l'angle optimal des roues de l'essieu directeur avant 4 du véhicule suiveur 2 à partir de l'angle des roues déterminé sous a) et de l'angle d'attelage mesuré sous b).

Selon une étape d), on fournit par l'intermédiaire de l'automate du véhicule suiveur 2, une consigne à l'actionneur de la direction motorisée dudit véhicule suiveur 2, ladite consigne permettant à l'actionneur d'orienter les roues de l'essieu directionnel avant 4 du véhicule suiveur 2 suivant un angle correspondant à l'angle optimal déterminé sous c).

Selon un autre exemple de réalisation, l'angle des roues du véhicule de tête 1 n'est avantageusement pas mesuré. L'angle des roues du véhicule de tête 1 est obtenu par l'intermédiaire d'un capteur d'angle de pignon de crémaillère 7 équipant la direction assistée dudit véhicule de tête 1, qui mesure l'angle du pignon de crémaillère qui se trouve à l'extrémité de la colonne de direction et qui entraîne la crémaillère de direction par rapport à sa position neutre en ligne droite.

Selon un exemple de réalisation, l'asservissement de l'angle $\alpha_1$ des roues du véhicule suiveur 2 est obtenu par exemple via l'asservissement de l'angle du pignon de crémaillère dudit véhicule suiveur 2. Le pilotage de l'angle $\alpha_1$ des roues du véhicule suiveur 2 est effectué en fournissant une consigne d'angle du pignon de crémaillère à l'actionneur de la direction motorisée électrique dudit véhicule suiveur 2.

Selon un exemple de réalisation, l'automate du véhicule suiveur 2 est paramétré pour mettre en œuvre une première loi de passage LP1 « angle du pignon de crémaillère à angle roues » qui déduit l'angle $\alpha_1$ des roues depuis l'angle du pignon de crémaillère y fourni par le capteur d'angle du pignon de crémaillère 7. Une seconde loi de passage LP2 « angle roues à angle du pignon de crémaillère » permet de déduire l'angle du pignon de crémaillère y en fonction de l'angle $\alpha_1$ des roues.

Le véhicule suiveur 2, utilisé en fonction « remorque » peut donc aisément être dépourvu de volant et de poste de conduite.

Selon un exemple de mise en œuvre, l'asservissement de l'angle $\alpha_1$ des roues d'un véhicule suiveur 2 se base avantageusement sur les opérations suivantes :

- la détermination via la première loi de passage LP1 « angle du pignon de crémaillère à angle roue », de l'angle $\alpha_0$ des roues du véhicule de tête 1, depuis l'angle du volant (orientation angulaire du volant) dudit véhicule de tête 1,
- la détermination via un modèle géométrique de l'ensemble tracteur-remorque, de l'angle $\alpha_1$ des roues du véhicule suiveur 2 (remorque) depuis l'angle $\alpha_0$ des roues du véhicule de tête 1 (tracteur) et l'angle $\beta_1$ du timon d'attelage 5a du véhicule suiveur 2, et
- la détermination via la seconde loi de passage LP2 « angle roue à angle du pignon de crémaillère » de l'angle du volant du véhicule suiveur 2 depuis l'angle $\alpha_1$ des roues dudit véhicule suiveur 2 fourni par le modèle géométrique.

Ainsi, l'angle du pignon de crémaillère du véhicule suiveur 2, obtenu à partir de l'angle $\alpha_1$ des roues dudit véhicule suiveur 2, est fourni à l'actionneur pilotant la position angulaire du pignon correspondant de la crémaillère de direction.

Ainsi, selon un exemple de mise en œuvre du procédé d'asservissement, l'étape a) comprend des sous-étapes a1) et a2).

Selon la sous-étape a1), on mesure l'angle du pignon de crémaillère du véhicule de tête 1 par rapport à sa position en ligne droite et selon la sous-étape a2), on utilise une première loi de passage LP1 pour déterminer l'angle des roues de l'essieu directionnel avant 4 du véhicule de tête 1 à partir de la mesure effectuée sous a1). Selon ce même exemple de mise en œuvre du procédé d'asservissement, l'étape d) comprend des sous-étapes d1) et d2).

Selon la sous-étape d1), on utilise une seconde loi de passage LP2 pour déterminer la position angulaire optimale du pignon de crémaillère du véhicule suiveur 2 à partir de l'angle optimal déterminé sous c) et selon la sous-étape d2), on fournit par l'intermédiaire de l'automate du véhicule suiveur 2, une consigne de position angulaire de pignon de crémaillère à l'actionneur, ladite consigne d'angle correspondant à l'angle optimal de pignon de crémaillère déterminé sous d1).

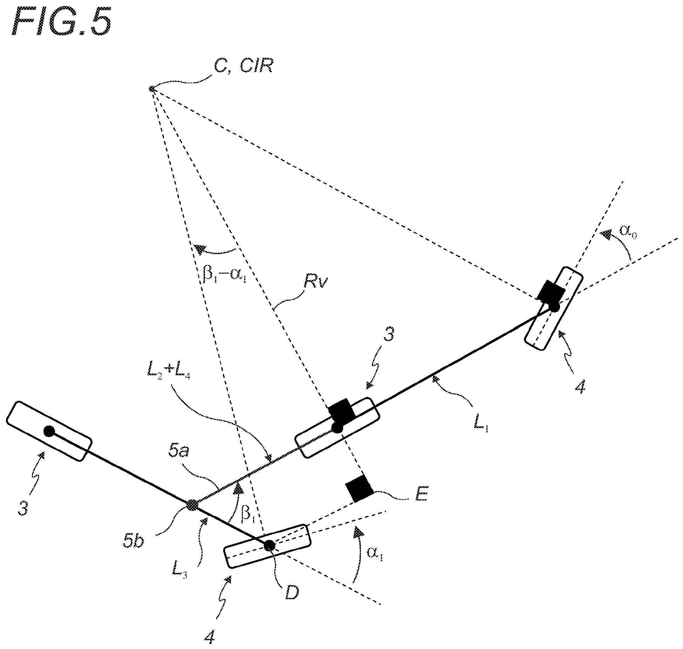

La figure 5 est une illustration schématique d'un exemple de modélisation géométrique d'une loi cinématique utilisée pour déterminer les angles de consigne de l'essieu directionnel avant 4 des véhicules suiveurs 2.

La figure 5 illustre schématiquement un exemple de modélisation géométrique basé sur une première hypothèse consistant à considérer que la trajectoire d'un véhicule lors d'un virage suit la géométrie directionnelle d'Ackermann ainsi que sur une seconde hypothèse consistant à préciser que la cinématique de l'essieu directionnel avant 4 d'un véhicule est assimilable au modèle simplifié dit en « bicyclette ».

Une telle modélisation permet de calculer le rayon instantané du virage $R_V$ du véhicule de tête 1 ou véhicule tracteur. Ainsi,

$$R_v = \frac{L_1}{\tan(\alpha_0)} \quad avec\ \alpha_0 \neq 0 \text{ et } \alpha_0 \neq \pm\pi$$

avec $L_1$ étant l'écart entre les essieux avant directionnel 4 et arrière 3 et $\alpha_0$ étant l'angle des roues de l'essieu avant 4 par rapport à l'axe longitudinal du véhicule de tête 1.

Le calcul de l'angle roue $\alpha_1$ du véhicule suiveur 2 à partir du triangle DEC identifié sur la figure 5 et rectangle en E, est donné par :

$$\tan(\beta_1 - \alpha_1) = \frac{DE}{CE} = \frac{(L_2 + L_4) - L_3\cos(\beta_1)}{R_v + L_3\sin(\beta_1)}$$

avec $\beta_1$ étant l'angle du timon d'attelage 5a par rapport à l'axe longitudinal du véhicule suiveur 2, $L_3$ étant la distance de l'articulation d'attelage 5b à l'essieu directionnel avant 4 du véhicule suiveur 2, $L_2+L_4$ étant la distance entre l'articulation d'attelage 5b à l'essieu arrière 3 du véhicule de tête 1 ou d'un véhicule suiveur 2 précédant le véhicule suiveur considéré.

L'angle roue du véhicule suiveur 2 est alors donné par :

$$\alpha_1 = \beta_1 - atan\left(\frac{(L_2 + L_4 - L_3\cos(\beta_1))}{R_v + L_3\sin(\beta_1)}\right)$$

L'angle roue $\alpha_1$ instantané d'asservissement optimal spécifique à chaque véhicule suiveur 2 est donc calculé de façon relativement simple, grâce à la loi ci-dessus, correspondant à une traduction mathématique de la modélisation géométrique.

La loi de passage angle roue $\alpha$ à un angle du pignon de crémaillère y correspondant, et inversement, est établi de façon simple et connue en fonction des caractéristiques de la crémaillère de direction ainsi que de la géométrie de l'essieu avant, lequel est aussi appelé train avant.

En considérant la première et la seconde hypothèse indiquée ci-dessus seul l'angle roue moyen correspondant à la moyenne entre les angles roue gauche et droite de l'essieu avant directeur est utilisé.

À titre d'exemple, la loi de passage d'un angle du pignon de crémaillère y à un angle roue $\alpha$ est donnée par le polynôme :

$$\alpha = n_1.\gamma + n_2.\gamma^2 + n_3.\gamma^3$$

et la loi de passage angle roue $\alpha$ à angle du pignon de crémaillère $\alpha$ est donnée par le polynôme :

$$\gamma = m_1.\alpha + m_2.\alpha^2 + m_3.\alpha^3$$

Les valeurs des constantes $n_1$, $n_2$, $n_3$ et $m_1$, $m_2$, $m_3$ sont liées à l'architecture de l'ensemble de direction comprenant la colonne de direction et la crémaillère de du système de direction assistée électrique.

Selon un exemple de fonctionnement du système d'asservissement de direction d'un convoi routier comprenant un véhicule de tête 1 et un véhicule suiveur 2, comportant par exemple chacun une colonne de direction, l'orientation angulaire de la colonne de direction correspond alors à l'angle du pignon de crémaillère. L'automate du véhicule suiveur 2 pilote ainsi la direction motorisée de ce même véhicule suiveur 2.

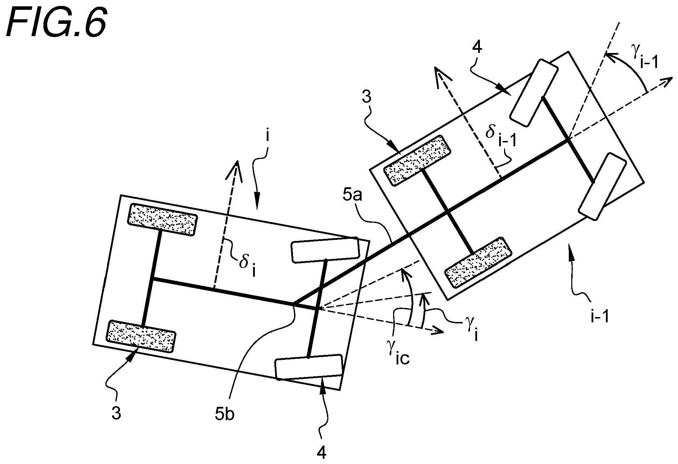

La figure 6 est une vue de dessus, par exemple du convoi de la figure 1, illustrant un exemple d'orientations angulaires des essieux de deux véhicules successifs i-1 et i d'un convoi, illustrant une correction d'une consigne d'angle des roues du véhicule suiveur grâce à un algorithme de stabilisation en lacet dudit convoi.

Selon un exemple de mise en œuvre, le procédé d'asservissement, comprend les étapes pour mesurer l'accélération latérale $\delta_i$ du véhicule i et pour mesurer l'accélération latérale $\delta_{i-1}$ du véhicule précédent i-1. Les véhicules i et i-1 sont avantageusement équipés chacun d'une centrale inertielle pour mesurer les accélérations latérales.

Le procédé d'asservissement consiste ensuite à calculer une consigne d'angle stabilisé $\gamma_{ic}$ en augmentant la consigne d'angle optimale y du pignon de crémaillère du véhicule i, d'un terme de compensation selon la loi :

$$\gamma_{ic} = \gamma + G.(\delta_{i-1} - \delta_i),$$

G étant une constante déterminée expérimentalement.

Le terme de compensation $G.(\delta_{i-1} - \delta_i)$ permet ainsi de corriger, de manière dynamique, la consigne d'angle optimale $\gamma$ et de fournir la consigne d'angle stabilisée $\gamma_{ic}$.

La consigne d'angle stabilisée $\gamma_{ic}$ est avantageusement calculée avec une légère avance temporelle, par rapport à la localisation effective du véhicule i. En effet, le terme de compensation angulaire $G.(\delta_{i-1} - \delta_i)$ intègre une information d'accélération latérale du véhicule i-1, lequel voit en premier (avec une légère avance dans le temps), la future trajectoire du véhicule i. Ceci permet de réduire les effets indésirables du retard généré par la direction assistée, ledit retard étant générateur d'instabilité.

Avantageusement, le terme de compensation angulaire $G.(\delta_{i-1} - \delta_i)$ est limité en amplitude angulaire donc en angle volant, de manière à ne pas perturber la trajectoire idéale du véhicule i ou véhicule remorque.

Grâce à un tel algorithme de stabilisation complémentaire, les efforts latéraux dans le timon 5a sont diminués et par conséquent l'instabilité du convoi. Un tel algorithme de stabilisation contribue grandement à la stabilité du convoi, en particulier lorsque ledit convoi comprend trois véhicules ou plus.

Il est évident que la présente description ne se limite pas aux exemples de réalisation ou de mise en œuvre explicitement décrits, mais comprend également d'autres modes de réalisation ou de mise en œuvre. Ainsi, une caractéristique technique décrite, peut être remplacée par une caractéristique technique équivalente et une étape de mise en œuvre du procédé d'asservissement pouvant être remplacée par une étape équivalente, sans sortir du cadre de la présente invention tel que défini par les revendications.

**Revendications**

1. Convoi routier motorisé comprenant un véhicule de tête (1) et au moins un véhicule suiveur (2) attelés ainsi qu'une liaison de communication du genre CAN reliant les véhicules (1, 2) du convoi, chacun des véhicules (1, 2) comportant un essieu arrière (3), un essieu directionnel avant (4), un système d'asservissement de direction électrique comprenant une crémaillère de direction, un actionneur agissant sur l'orientation angulaire de l'essieu directionnel avant (4) et un automate pilotant l'actionneur, chacun des véhicules (1, 2) comportant également des organes d'attelage avant (5) et des organes d'attelage arrière (6) de manière à réaliser l'attelage du véhicule suiveur (2) au véhicule de tête (1) ou à un autre véhicule suiveur (2), les automates des véhicules (1, 2) étant paramétrés pour générer des consignes d'orientation angulaire de l'essieu directionnel avant (4) du ou de chaque véhicule suiveur (2), **caractérisé en ce que** chacun des véhicules (1, 2) est équipé d'une part d'un capteur d'orientation permettant de déterminer l'angle des roues de l'essieu directionnel avant (4) et d'autre part d'un capteur angulaire d'attelage (8) pour déterminer l'orientation angulaire en lacet de l'attelage par rapport au châssis du véhicule (1, 2), l'automate du ou de chaque véhicule suiveur (2) fournissant une consigne d'angle optimal des roues et spécifique à l'actionneur du véhicule suiveur (2) considéré, ladite consigne d'angle optimal étant définie en utilisant une loi de pilotage cinématique qui est une fonction de l'angle des roues de l'essieu directionnel (4) du véhicule précédent et de l'orientation angulaire en lacet de l'attelage par rapport au châssis du véhicule suiveur (2) considéré, de manière à obtenir un convoi monotrace.

**2.** Convoi routier motorisé selon la revendication 1, **caractérisé en ce que** le capteur d'orientation est un capteur d'angle d'un pignon de crémaillère de direction lequel est localisé en sortie de crémaillère de direction, qui mesure l'angle du pignon de crémaillère par rapport à sa position en ligne droite, ledit angle de pignon de crémaillère permettant de déterminer par calcul, l'angle des roues de l'essieu directionnel (4).

**3.** Convoi routier motorisé selon la revendication 1 ou 2, **caractérisé en ce que** les organes d'attelage avant (5) comprennent un timon d'attelage (5a) à une seule articulation d'attelage (5b), localisé sous le véhicule et dont l'extrémité libre est verrouillée angulairement avec les organes d'attelage arrière (6) du véhicule précédent.

**4.** Convoi routier motorisé selon la revendication 3, **caractérisé en ce que** l'articulation d'attelage (5b) est localisée dans un plan transversal à la direction longitudinale du véhicule suiveur (2) considéré, au voisinage et de préférence à l'arrière de l'essieu directionnel avant (4).

**5.** Convoi routier motorisé selon l'une quelconque des revendications 1 à 4, **caractérisé en ce que** les organes d'attelage arrière (6) comprennent une chape d'attelage (6a).

**6.** Convoi routier motorisé selon l'une quelconque des revendications 1 à 5, **caractérisé en ce qu'**au moins le véhicule de tête (1) comporte un poste de conduite équipé d'un volant pour commander manuellement ou à distance l'orientation angulaire de l'essieu avant (4) directionnel dudit véhicule de tête (1).

**7.** Convoi routier motorisé selon la revendication 6, **caractérisé en ce qu'**il comprend un véhicule de tête (1) et au moins un véhicule suiveur (2), ledit véhicule suiveur (2) étant dépourvu de poste de conduite.

**8.** Convoi routier motorisé selon l'une des revendications 1 à 5, **caractérisé en ce qu'**il comprend un véhicule de tête (1) et au moins un véhicule suiveur (2), lesdits véhicule de tête (1) et suiveur (2) étant dépourvus de poste de conduite pour constituer un convoi autonome.

**9.** Convoi routier motorisé selon l'une quelconque des revendication 1 à 5 et 6 ou 7, **caractérisé en ce qu'**il est utilisé en convoi autonome.

**10.** Convoi routier motorisé selon la revendication 6 ou 8 ou 9, **caractérisé en ce qu'**il comprend deux, trois ou quatre véhicules suiveurs (2) identiques au véhicule de tête (1).

**11.** Convoi routier motorisé selon l'une quelconque des revendications 1 à 10, **caractérisé en ce que** la liaison de communication comprend des broches de connexion, pour relier électriquement les véhicules attelés et dont l'architecture électrique permet d'identifier la position de chaque véhicule (1, 2) dans le convoi.

**12.** Convoi routier motorisé selon la revendication 11, **caractérisé en ce que** les broches de connexion sont intégrées aux organes d'attelage avant (5) et arrière (6) du véhicule de tête (1) et du ou des véhicules suiveurs (2).

**13.** Procédé d'asservissement de l'orientation des roues de l'essieu directionnel avant (4) d'un véhicule suiveur (2) pour un convoi routier motorisé monotrace conforme à l'une quelconque des revendications 1 à 12, comprenant les étapes :

a) déterminer l'angle des roues de l'essieu directionnel avant (4) par rapport au châssis du véhicule de tête (1),
b) mesurer l'angle d'attelage du véhicule suiveur (2) correspondant à l'orientation angulaire de l'attelage par rapport au châssis dudit véhicule suiveur (2),
c) utiliser une loi mathématique déduite d'une modélisation géométrique du convoi, pour déterminer l' angle optimal des roues de l'essieu directeur avant (4) du véhicule suiveur (2) à partir de l'angle des roues déterminé sous a) et de l'angle d'attelage mesuré sous b), et
d) fournir par l'intermédiaire de l'automate du véhicule suiveur (2), une consigne à l'actionneur de la direction motorisée dudit véhicule suiveur (2), ladite consigne permettant à l'actionneur d'orienter les roues de l'essieu directionnel avant (4) du véhicule suiveur (2) suivant un angle correspondant à l'angle optimal déterminé sous c).

**14.** Procédé d'asservissement selon la revendication 13, **caractérisé en ce que** l'étape a) comprend les sous-étapes :

a1) mesurer l'angle du pignon de crémaillère du véhicule de tête (1) par rapport à sa position en ligne droite,
a2) utiliser une première loi de passage LP1 pour déterminer l'angle des roues de l'essieu directionnel avant (4)

du véhicule de tête (1) à partie de la mesure effectuée sous a1),

et **en ce que** l'étape d) comprend les sous-étapes :

d1) utiliser une seconde loi de passage LP2 pour déterminer la position angulaire optimale du pignon de crémaillère du véhicule suiveur (2) à partir de l'angle optimal déterminé sous c),
d2) fournir par l'intermédiaire de l'automate du véhicule suiveur (2), une consigne de position angulaire de pignon de crémaillère à l'actionneur, ladite consigne d'angle correspondant à l'angle optimal de pignon de crémaillère déterminé sous d1).

15. Procédé d'asservissement selon la revendication 13 ou 14, pour stabiliser en lacet le convoi, **caractérisé en ce qu'**il comprend les étapes :

- mesurer l'accélération latérale $\delta_i$ du véhicule (i),
- mesurer l'accélération latérale $\delta_{i-1}$ du véhicule précédent (i-1),
- calculer une consigne d'angle stabilisé $\gamma_{ic}$ en augmentant la consigne d'angle optimale y du pignon de crémaillère du véhicule (i) d'un terme de compensation angulaire selon la loi : $\gamma_{ic} = \gamma + G.(\delta_{i-1} - \delta_i)$, avec G une constante.

**Patentansprüche**

1. Motorisierter Lastzug, bestehend aus einem Zugfahrzeug (1) und mindestens einem Anhängerfahrzeug (2) sowie einer CAN- Bus- ähnlichen Kommunikationsverbindung zwischen den Fahrzeugen (1, 2) des Konvois, wobei jedes der Fahrzeuge (1, 2) eine Hinterachse (3), eine vordere Lenkachse (4), ein elektrisches Lenkungssystem mit einer Zahnstange, einen auf die Winkelausrichtung der vorderen Lenkachse (4) wirkenden Stellantrieb und eine den Stellantrieb steuernde Steuerung umfasst, wobei jedes der Fahrzeuge (1, 2) außerdem vordere Kupplungselemente (5) und hintere Kupplungselemente (6) aufweist, um den Anhänger (2) mit dem Zugfahrzeug 1) oder einem anderen Anhänger (2) zusammen zu kuppeln, wobei die Steuerungen der Fahrzeuge (1,2) so parametriert sind, dass sie Winkelausrichtungsvorgaben für die vordere Lenkachse (4) des oder jedes Anhängers (2) erzeugen, **dadurch gekennzeichnet, dass** jedes der Fahrzeuge (1, 2) einerseits mit einem Ausrichtungssensor ausgestattet ist, mit dem der Winkel der Räder der vorderen Lenkachse (4) bestimmt werden kann und andererseits mit einem Kupplungswinkelsensor (8) zur Bestimmung der Gierwinkelausrichtung der Kupplung in Bezug auf das Fahrgestell des Fahrzeugs ausgestattet ist, wobei die Steuerung des oder jedes Anhängers (2) einen optimalen Winkelvorgabewert für die Räder liefert, der für den Stellantrieb des betreffenden Anhängers (2) spezifisch ist, wobei der optimale Sollwinkel unter Verwendung eines kinematischen Steuerungsgesetzes definiert wird, das eine Funktion des Winkels der Räder der Lenkachse (4) des vorausfahrenden Fahrzeugs und der Gierwinkelausrichtung der Anhängerkupplung in Bezug auf das Fahrgestell des betreffenden Anhängers (2) ist, um einen einspurigen Konvoi zu erhalten.

2. Motorisierter Lastzug gemäß Anspruch 1, **dadurch gekennzeichnet, dass** der Orientierungssensor der Winkelsensor eines Lenkzahnstangenritzels ist, der sich am Ausgang der Lenkzahnstange befindet und den Winkel des Zahnstangenritzels in Bezug auf seine Position in gerader Linie misst, wobei über diesen Winkel des Zahnstangenritzels der Winkel der Räder der Lenkachse (4) berechnet werden kann.

3. Motorisierter Lastzug gemäß Anspruch 1 oder 2, **dadurch gekennzeichnet, dass** die vorderen Kupplungselemente (5) eine Deichsel (5a) mit einem einzigen Kupplungsgelenk (5b) umfassen, die sich unter dem Fahrzeug befindet und deren freies Ende winklig mit den hinteren Kupplungselementen (6) des vorausfahrenden Fahrzeugs verriegelt ist.

4. Motorisierter Lastzug gemäß Anspruch 3, **dadurch gekennzeichnet, dass** sich das Kupplungsgelenk (5b) in einer Ebene quer zur Längsrichtung 10 des betreffenden Anhängers (2) befindet, in der Nähe und vorzugsweise hinter der vorderen Lenkachse (4).

5. Motorisierter Lastzug gemäß einem der Ansprüche 1 bis 4, **dadurch gekennzeichnet, dass** die hinteren Kupplungselemente (6) eine Kupplungsgabel (6a) umfassen.

6. Motorisierter Lastzug gemäß einem der Ansprüche 1 bis 5, **dadurch gekennzeichnet, dass** zumindest das Zugfahrzeug (1) einen Fahrerplatz aufweist, der mit einem Lenkrad ausgestattet ist, um die Winkelausrichtung der lenkbaren Vorderachse (4) des Zugfahrzeug s (1) manuell oder ferngesteuert zu steuern.

7. Motorisierter Lastzug gemäß Anspruch 6, **dadurch gekennzeichnet, dass** er ein Zugfahrzeug (1) und mindestens einen Anhänger (2) umfasst, wobei der Anhänger (2) keinen Fahrerplatz aufweist.

8. Motorisierter Lastzug gemäß einem der Ansprüche 1 bis 5, **dadurch gekennzeichnet, dass** er ein Zugfahrzeug (1) und mindestens einen Anhänger (2) umfasst, wobei das Zugfahrzeug (1) und der Anhänger (2) keinen Fahrerplatz aufweisen, um einen autonomen Konvoi zu bilden.

9. Motorisierter Lastzug gemäß einem der Ansprüche 1 bis 5 und 6 oder 7, **dadurch gekennzeichnet, dass** er als autonomer Konvoi verwendet wird.

10. Motorisierter Lastzug gemäß Anspruch 6 oder 8 oder 9, **dadurch gekennzeichnet, dass** er zwei, drei oder vier mit dem Zugfahrzeug (1) identische Anhänger (2) umfasst.

11. Motorisierter Lastzug gemäß einem der Ansprüche 1 bis 10, **dadurch gekennzeichnet, dass** die Kommunikationsverbindung Verbindungsstifte umfasst, um die aneinander gekuppelten Fahrzeuge elektrisch zu verbinden, und deren elektrische Architektur es ermöglicht, die Position jedes Fahrzeugs (1, 2) im Konvoi zu identifizieren.

12. Motorisierter Lastzug gemäß Anspruch 11, **dadurch gekennzeichnet, dass** die Verbindungsstifte in die vorderen (5) und hinteren (6) Kupplungsvorrichtungen des führenden Fahrzeugs (1) und des oder der folgenden Fahrzeuge (2) integriert sind.

13. Verfahren zur Steuerung der Ausrichtung der Räder der vorderen Lenkachse (4) eines Anhängers (2) für einen einspurigen, motorisierten Lastzug gemäß einem der Ansprüche 1 bis 12, mit den folgenden Schritten:

    a) Bestimmung des Winkels der Räder der Vorderachse (4) relativ zum Fahrgestell des Zugfahrzeugs (1),
    b) Messung des Kupplungswinkels des Anhängers (2) entsprechend der Winkelausrichtung der Kupplung relativ zum Fahrgestell des Anhängers (2),
    c) Verwendung eines aus einer geometrischen Modellierung des Konvois abgeleiteten mathematischen Gesetzes, um den optimalen Winkel der Räder der vorderen Lenkachse (4) des Anhängers (2) anhand des unter a) bestimmten Radwinkels und des unter b) gemessenen Kupplungswinkels zu bestimmen, und
    d) über die Steuerung des Anhängers (2) einen Befehl an das motorisierten Lenkstellglied des Anhängers (2) zu senden, wobei dieser Befehl es dem Stellglied ermöglicht, die Räder der Vorderachse (4) des Anhängers (2) in einem Winkel auszurichten, der dem unter c) ermittelten optimalen Winkel entspricht.

14. Regelungsverfahren gemäß Anspruch 13, **dadurch gekennzeichnet, dass** Schritt a) die folgenden Teilschritte umfasst:

    a1) Messung des Winkels des Zahnstangenritzels des Zugfahrzeugs (1) in Bezug auf seine Position in gerader Linie,
    a2) Verwendung eines ersten Übergangsgesetzes LP1, um den Winkel der Räder der vorderen Lenkachse (4) des Zugfahrzeug s (1) anhand der unter a1) durchgeführten Messung zu bestimmen,

    und dadurch, dass Schritt d) die folgenden Teilschritte umfasst:

    d1) Verwendung eines zweiten Übergangsgesetzes LP2, um die optimale Winkelposition des Zahnstangenritzels des Anhängers (2) anhand des unter c) bestimmten optimalen Winkels zu bestimmen,
    d2) Bereitstellen eines Sollwerts für die Winkelposition des Zahnstangenritzels über die Steuerung des Anhängers (2) an das Stellglied, wobei der genannte Winkel-Sollwert dem unter d1) bestimmten optimalen Winkel des Zahnstangenritzels entspricht.

15. Regelungsverfahren gemäß Anspruch 13 oder 14 zur Stabilisierung des Konvois in Gierrichtung, **dadurch gekennzeichnet, dass** es die folgenden Schritte umfasst:

    - Messung der Querbeschleunigung $\delta_i$ des Fahrzeugs (i),
    - Messung der Querbeschleunigung $\delta_{i-1}$ des vorausfahrenden Fahrzeugs (i-1),
    - Berechnen eines stabilisierten Sollwinkels $\gamma_{ic}$ durch Erhöhen des optimalen Sollwinkels $\gamma$ des Zahnstan-

genritzels des Fahrzeugs (i) um einen Winkelausgleichswert gemäß der folgenden Formel: $\gamma_{ic} = \gamma + G.(\delta_{i-1} - \delta_i)$, wobei G eine Konstante ist.

**Claims**

1. Motorised road train comprising a lead vehicle (1) and at least one hitched follower vehicle (2), as well as a CAN communication link linking the vehicles (1, 2) of the train, each of the vehicles (1, 2) comprising a rear axle (3), a front steering axle (4), an electric steering control system comprising a steering rack, an actuator acting on the angular orientation of the front steering axle (4) and a controller driving the actuator, each of the vehicles (1, 2) also comprising front hitching members (5) and rear hitching members (6) so that the follower vehicle (2) is hitched to the lead vehicle (1) or to another follower vehicle (2), the controllers of the vehicles (1, 2) being configured to generate angular orientation instructions of the front steering axle (4) of the or of each follower vehicle (2), **characterised in that** each of the vehicles (1, 2) is equipped both with an orientation sensor for determining the angle of the wheels of the front steering axle (4) and with an angular hitching sensor (8) for determining the yaw angular orientation of the hitch relative to the chassis of the vehicle (1, 2), the controller of the or of each follower vehicle (2) delivering an optimal angle instruction of the wheels and specific to the actuator of the follower vehicle (2) in question, said optimal angle instruction being defined by using a kinematic control law that is dependent on the angle of the wheels of the steering axle (4) of the preceding vehicle and on the yaw angular orientation of the hitch relative to the chassis of the follower vehicle (2) in question, so as to obtain a single-track train.

2. Motorised road train according to claim 1, **characterised in that** the orientation sensor is an angle sensor of a steering rack pinion, which is located at the output of the steering rack, which measures the angle of the rack pinion relative to its position in a straight line, said rack pinion angle making it possible to determine by calculation, the angle of the wheels of the steering axle (4).

3. Motorised road train according to claim 1 or 2, **characterised in that** the front hitching members (5) comprise a hitching drawbar (5a) to one single hitching articulation (5b), located under the vehicle, and the free end of which is angularly locked with the rear hitching members (6) of the preceding vehicle.

4. Motorised road train according to claim 3, **characterised in that** the hitching articulation (5b) is located in a plane transverse to the longitudinal direction of the follower vehicle (2) in question, in the vicinity and preferably at the rear of the front steering axle (4).

5. Motorised road train according to any one of claims 1 to 4, **characterised in that** the rear hitching members (6) comprise a hitch clevis (6a).

6. Motorised road train according to any one of claims 1 to 5, **characterised in that** at least the lead vehicle (1) comprises an operator station equipped with a steering wheel to manually or remotely control the angular orientation of the front steering axle (4) of said lead vehicle (1).

7. Motorised road train according to claim 6, **characterised in that** it comprises a lead vehicle (1) and at least one follower vehicle (2), said follower vehicle (2) having no operator station.

8. Motorised road train according to any one of claims 1 to 5, **characterised in that** it comprises a lead vehicle (1) and at least one follower vehicle (2), said lead (1) and follower (2) vehicles having no operator station to constitute an autonomous train.

9. Motorised road train according to any one of claims 1 to 5 and 6 or 7, **characterised in that** it is used as an autonomous train.

10. Motorised road train according to claim 6 or 8 or 9, **characterised in that** it comprises two, three or four follower vehicles (2) identical to the lead vehicle (1).

11. Motorised road train according to any one of claims 1 to 10, **characterised in that** the communication link comprises connecting pins to electrically link the hitched vehicles and the electric architecture of which makes it possible to identify the position of each vehicle (1, 2) in the train.

**12.** Motorised road train according to claim 11, **characterised in that** the connecting pins are integrated to the front (5) and rear (6) hitching members of the lead vehicle (1) and of the follower vehicle(s) (2).

**13.** Method for controlling the orientation of the wheels of the front steering axle (4) of a follower vehicle (2) for a single-track motorised road train according to any one of claims 1 to 12, comprising the following steps:

a) determining the angle of the wheels of the front steering axle (4) relative to the chassis of the lead vehicle (1),
b) measuring the hitching angle of the follower vehicle (2) corresponding to the angular orientation of the hitch relative to the chassis of said follower vehicle (2),
c) using a mathematical law deduced from a geometric modelling of the train, to determine the optimal angle of the wheels of the front steering axle (4) of the follower vehicle (2) from the angle of the wheels determined in a) and of the hitching angle measured in b), and
d) delivering, by way of the controller of the follower vehicle (2), an instruction to the actuator of the motorised steering of said follower vehicle (2), said instruction enabling the actuator to orient the wheels of the front steering axle (4) of the follower vehicle (2), along an angle corresponding to the optimal angle determined in c).

**14.** Control method according to claim 13, **characterised in that** step a) comprises the following sub-steps:

a1) measuring the angle of the rack pinion of the lead vehicle (1) relative to its position in a straight line,
a2) using a first passage law LP1 to determine the angle of the wheels of the front steering axle (4) of the lead vehicle (1) from the measurement taken in a1),

and **in that** step d) comprises the following sub-steps:

d1) using a second passage law LP2 to determine the optimal angular position of the rack pinion of the follower vehicle (2) from the optimal angle determined in c),
d2) delivering by way of the controller of the follower vehicle (2), an angular position instruction of the rack pinion to the actuator, said angle instruction corresponding to the optimal angle of the rack pinion determined in d1).

**15.** Control method according to claim 13 or 14, to stabilise the train in a yaw, **characterised in that** it comprises the following steps:

- measuring the lateral acceleration $\delta_i$ of the vehicle (i),
- measuring the lateral acceleration $\delta_{i-1}$ of the preceding vehicle (i-1),
- calculating a stabilised angle instruction $\gamma ic$ by increasing the optimal angle instruction $\gamma$ of the rack pinion of the vehicle (i) of a compensation term according to law: $yic = \gamma + G.(\delta_{i-1} - \delta_i)$, with G a constant.

FIG.1

FIG.2

*FIG.3*

*FIG.4*

## FIG.5

FIG.6

**RÉFÉRENCES CITÉES DANS LA DESCRIPTION**

**Documents brevets cités dans la description**

- WO 9840263 A